# EUROPEAN PATENT SPECIFICATION

(11) **EP 4 006 842 B1**
(45) Date of publication and mention of the grant of the patent: **03.12.2025**
(21) Application number: 20843377.1
(22) Date of filing: 28.05.2020
(51) Int. Cl.: G01M 5/00, G06T 7/00, G06T 11/60

(54) **CRACK EVALUATION DEVICE, CRACK EVALUATION METHOD, AND CRACK EVALUATION PROGRAM**
VORRICHTUNG, VERFAHREN UND PROGRAMM ZUR BEURTEILUNG VON RISSEN
DISPOSITIF D'ÉVALUATION DE FISSURES, PROCÉDÉ D'ÉVALUATION DE FISSURES ET PROGRAMME D'ÉVALUATION DE FISSURES

(30) Priority: 23.07.2019 JP 2019135152
(43) Date of publication of application: 01.06.2022
(73) Proprietor: FUJIFILM Corporation, Tokyo 106-8620 (JP)
(72) Inventor: MATSUMOTO Kazuma, Tokyo 107-0052 (JP)
(74) Representative: Meissner Bolte Partnerschaft mbB
(86) International application number: PCT/JP2020/021193
(87) International publication number: WO 2021/014754

(56) References cited:
- EP-A1- 3 396 358
- EP-A1- 3 410 102
- WO-A1-2017/126367
- JP-A- 2005 227 829

## Description

### BACKGROUND OF THE INVENTION

### 1. Field of the Invention

The present invention relates to a crack evaluation apparatus, a crack evaluation method, and a crack evaluation program, and particularly to a technique for evaluating cracks of a structure.

### 2. Description of the Related Art

Various types of damage occur and progress over time in structures such as a bridge, a tunnel, a road, and a building. Thus, to ensure the safety of the structures, repairs need to be made in accordance with the situation of damage. Damage has been inspected by an operator visually or by using a tool. However, in terms of an operation time, cost, operation site environment, and the like, electronic processing has recently been performed by using an imaging apparatus and/or an image processing apparatus.

For example, JP1994-148089A (JP-H6-148089A) describes measurement of cracks in concrete or the like in which vector data of cracks is created and group numbers and information such as a continuation point, an end point, or a branch point are given. In addition, JP2002-257744A describes a concrete defect inspection in which vector data of cracks is created and information of crossing of cracks is written into a file.

EP3410102A1 describes a crack information detection device, a method of detecting crack information, and a crack information detection program capable of accumulating a manual editing history with respect to an automatically detected damage to improve detection accuracy of a crack.

EP3396358 A1 describes an information processing device and an information processing method capable of appropriately recognizing a state of damage progressing over time in order to support maintenance and management of a structure and enabling prediction of progress of a damaged state.

### SUMMARY OF THE INVENTION

In the case where crack vectors are created through image processing or the like, evaluation on the degree of damage based on the crack vectors may be different from an evaluation result on the degree of damage obtained by an operator visually tracing cracks.

The present invention has been made in view of the above circumstances, and an object thereof is to provide a crack evaluation apparatus, a crack evaluation method, and a crack evaluation program that can reduce the load of creating crack vectors through image processing and can obtain an evaluation result that is equivalent to an evaluation by an operator.

The invention is defined by the appended claims. A crack evaluation apparatus according to a first aspect is provided as defined by appended claim 1.

According to the first aspect, it is possible to reduce the load of creating the crack vectors, to check the coupling crack vector easily, and to obtain an evaluation result that is equivalent to an evaluation by an operator.

**In** a crack evaluation apparatus according to a second aspect, the editing includes deleting the coupling crack vector and generating a new coupling crack vector that couples crack vectors that are spatially separated from each other. According to the second aspect, a user can delete the coupling crack vector and can create the new coupling crack vector.

**In** a crack evaluation apparatus according to a third aspect, the display unit displays the new coupling crack vector in a visually distinguishable manner from the crack vectors and the coupling crack vector.

According to the third aspect, the coupling crack vector created by the crack vector generating unit and the coupling crack vector created by the user can be easily recognized.

In a crack evaluation apparatus according to a fourth aspect, the display unit displays the evaluation result. According to the fourth aspect, the user can easily check the evaluation result.

A crack evaluation apparatus according to a fifth aspect further includes an output unit that outputs data of the evaluation result. According to the fifth aspect, the data of the evaluation result can be effectively used.

In a crack evaluation apparatus according to a sixth aspect, the display unit displays ground information of the evaluation result. According to the sixth aspect, the ground information of the evaluation result can be easily checked.

In a crack evaluation apparatus according to a seventh aspect, the operating unit accepts a user operation for editing the evaluation result. According to the seventh aspect, the user can easily edit the evaluation result.

In a crack evaluation apparatus according to an eighth aspect, the operating unit accepts a user operation for editing the coupling standard. According to the eighth aspect, the user can easily edit the coupling standard. A coupling crack vector desired by the user can be created.

In a crack evaluation apparatus according to a ninth aspect, the crack vectors can be created.

A crack evaluation method according to a tenth aspect to be performed by a computer is provided as defined by appended claim 9.

According to the tenth aspect, substantially the same effects as those of the first aspect can be obtained.

A non-transitory computer readable recording medium storing a crack evaluation program according to an eleventh aspect causes the computer to execute the crack evaluation method. According to the eleventh aspect, the computer can execute the crack evaluation method.

According to the present invention, it is possible to reduce the load of creating crack vectors through image processing, to check a coupling crack vector easily, and to obtain an evaluation result that is equivalent to an evaluation by an operator.

### BRIEF DESCRIPTION OF THE DRAWINGS

Fig. 1 is a perspective view illustrating the configuration of a bridge, which is an example of a structure;
Fig. 2 is a block diagram illustrating the configuration of a crack evaluation apparatus according to an embodiment of the present invention;
Fig. 3 is a block diagram illustrating an internal configuration example of a crack vector generating unit;
Fig. 4 is a table illustrating an example of a standard for evaluating the degree of crack damage;
Fig. 5 is a table illustrating another example of the standard for evaluating the degree of crack damage;
Fig. 6 is a flowchart of an embodiment of a crack evaluation method;
Fig. 7 is a diagram for illustrating a state in which a start point of a crack vector is determined;
Fig. 8 is another diagram for illustrating a state in which a start point of a crack vector is determined;
Fig. 9 is a diagram illustrating coupling of crack vectors that are spatially separated from each other;
Fig. 10 is another diagram illustrating coupling of crack vectors that are spatially separated from each other;
Fig. 11 is a diagram illustrating another coupling of crack vectors that are spatially separated from each other;
Fig. 12 is another diagram illustrating the other coupling of crack vectors that are spatially separated from each other;
Fig. 13 is a diagram illustrating still another coupling of crack vectors that are spatially separated from each other;
Fig. 14 is another diagram illustrating the still other coupling of crack vectors that are spatially separated from each other;
Fig. 15 is another diagram illustrating the still other coupling of crack vectors that are spatially separated from each other;
Fig. 16 is another diagram illustrating the still other coupling of crack vectors that are spatially separated from each other;
Fig. 17 illustrates an example of crack vector information included in hierarchical structure information;
Fig. 18 is a diagram for illustrating a method for determining a hierarchy of crack vectors;
Fig. 19 illustrates a state in which a display unit displays, in a classified manner, crack vectors and a coupling crack vector that are generated;
Fig. 20 illustrates an example of an operation for editing the crack vectors and the coupling crack vector;
Fig. 21 illustrates another example of an operation for editing the crack vectors and the coupling crack vector;
Fig. 22 illustrates still another example of an operation for editing the crack vectors and the coupling crack vector;
Fig. 23 illustrates a state in which the display unit displays an evaluation result; and
Fig. 24 illustrates an example of an operation for editing a coupling standard.

### DESCRIPTION OF THE PREFERRED EMBODIMENTS

Now, a crack evaluation apparatus, a crack evaluation method, and a crack evaluation program according to embodiments will be described with reference to the accompanying drawings.

### <Inspection Target Structure>

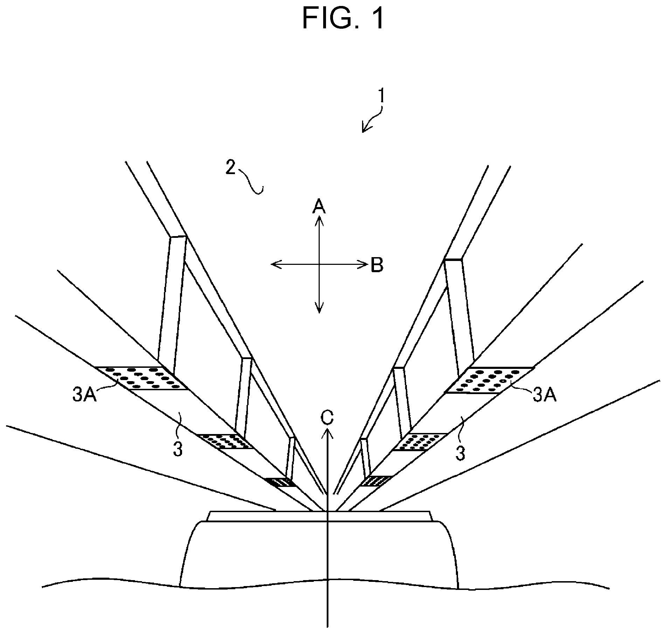

Fig. 1 is a perspective view illustrating the configuration of a bridge 1, which is an example of an inspection target structure to which a crack evaluation apparatus, a crack evaluation method, and a crack evaluation program according to the present invention is applied. The bridge 1 (structure) illustrated in Fig. 1 has main girders 3, and the main girders 3 are joined at joint portions 3A. The main girders 3 are members that span the area between abutments and/or piers and support the load of vehicles and the like on a deck slab 2. The deck slab 2 on which vehicles travel is provided above the main girders 3. The deck slab 2 is made of typical reinforced concrete. Note that the bridge 1 has, in addition to the deck slab 2 and the main girders 3, members such as cross beams, sway bracing, and lateral bracing, which are not illustrated.

The inspection target structure (hereinafter also simply referred to as "structure") to which the present invention is applied is a bridge in this example but may also be another type of structure, different from a bridge, such as a road, a tunnel, a dam, or a construction. In addition, the structure is not only an artificial structure, but also may be a natural structure.

### <Acquisition of Image>

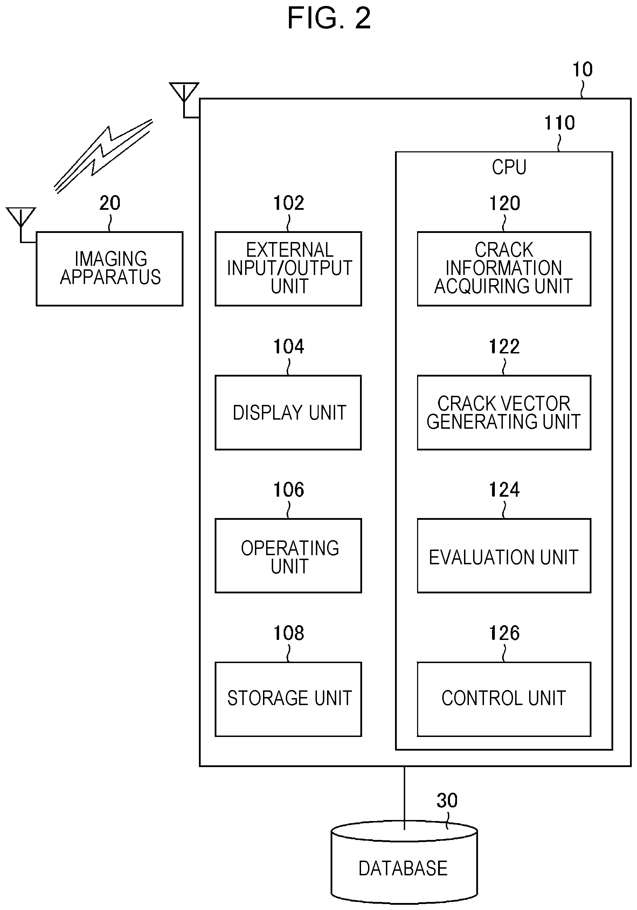

In a case of inspecting the bridge 1, an operator images the bridge 1 with an imaging apparatus 20 (see Fig. 2) from below (C direction in Fig. 1) to acquire a captured image of an inspection area. Imaging is performed while the operator is moving as appropriate in the direction in which the bridge 1 extends (A direction in Fig. 1) and in the direction orthogonal thereto (B direction in Fig. 1). Note that, if it is difficult for the operator to move depending on the surrounding situation of the bridge 1, imaging may also be performed by a mobility that is movable along the bridge 1 and on which the imaging apparatus 20 is installed. Such a mobility may be provided with an elevating mechanism of the imaging apparatus 20 and a pan/tilt mechanism. Note that examples of the mobility may be, but are not limited to, a vehicle, a robot, and a drone (aircraft).

### <Configuration of Crack Evaluation Apparatus>

Fig. 2 is a block diagram illustrating the configuration of the crack evaluation apparatus according to the present invention.

A crack evaluation apparatus 10 is an example of the crack evaluation apparatus according to the present invention and acquires crack information of a structure by acquiring a captured image obtained by imaging the structure with the imaging apparatus 20 (e.g., digital camera) and performing image processing on the captured image.

**In** addition, the crack evaluation apparatus 10 generates crack vectors from the crack information of the structure obtained through image processing and generates a coupling crack vector from the generated crack vectors.

In addition, the crack evaluation apparatus 10 displays, in a visually distinguishable manner, the crack vectors and the coupling crack vector and accepts an operation for editing the crack vectors and the coupling crack vector.

In addition, the crack evaluation apparatus 10 evaluates cracks on the basis of crack information of the crack vectors and the coupling crack vector after editing.

Examples of the crack evaluation apparatus 10 may be, but are not limited to, a personal computer, a tablet terminal, and a smartphone. The crack evaluation apparatus 10 may be constituted by a server apparatus. The crack evaluation apparatus 10 may also be constituted by a plurality of apparatuses.

The imaging apparatus 20 has an imaging function. Note that, if the crack evaluation apparatus 10 is a mobile terminal, the imaging apparatus 20 may be a digital camera incorporated in the mobile terminal and may be, for example, a digital camera incorporated in a tablet terminal or a smartphone or a digital camera mounted on a robot or a drone.

A database 30 stores various types of information for implementing crack evaluation of a structure. Note that the database 30 may be incorporated in the crack evaluation apparatus 10.

As illustrated in Fig. 2, the crack evaluation apparatus 10 includes an external input/output unit 102 that enables input and output of various types of information with an external apparatus or a storage medium of the crack evaluation apparatus 10, a display unit 104 that displays various types of information, an operating unit 106 that accepts a user operation, a storage unit 108 that stores various types of information, and a CPU (Central Processing Unit) 110 that controls the entirety of the crack evaluation apparatus 10.

The external input/output unit 102 has a communication interface for wired communication or wireless communication and a recording medium interface of a contact type or a contactless type.

A captured image from the imaging apparatus 20, the database 30, and a storage medium can be input to the external input/output unit 102. Information from an external device and an internal device of the crack evaluation apparatus 10 can be input to the external input/output unit 102.

From the database 30, various types of information accumulated in the database 30 can be input to the external input/output unit 102. In addition, the external input/output unit 102 can output various types of information generated in the crack evaluation apparatus 10 to, for example, an external device of the crack evaluation apparatus 10, such as the database 30, and an internal device of the crack evaluation apparatus 10.

The display unit 104 includes a display device that can display an image, such as a liquid crystal display (LCD) and displays a captured image, various types of information that are input from the database 30, and various types of information including crack vectors and a coupling crack vector generated in the crack evaluation apparatus 10.

The operating unit 106 includes an input device such as a touch panel or a keyboard and accepts an operation of a person for editing various types of information displayed on the display unit 104.

The storage unit 108 includes a non-volatile storage device and stores various programs for implementing crack evaluation of a structure and various types of information necessary to execute various programs.

The database 30 or the storage unit 108 stores various types of information.

The CPU 110 exerts various functions for crack evaluation by performing various types of processing for supporting crack evaluation in accordance with a program stored in the storage unit 108.

The CPU 110 includes a crack information acquiring unit 120. The crack information acquiring unit 120 performs image processing on a captured image of a structure and acquires crack information about a crack of the structure.

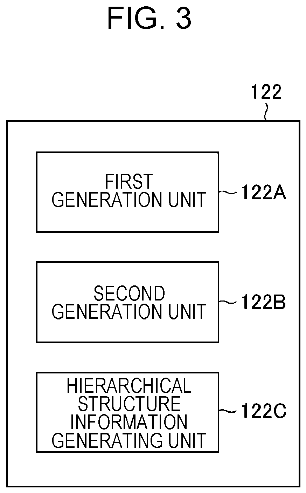

The CPU 110 includes a crack vector generating unit 122. As illustrated in Fig. 3, the crack vector generating unit 122 includes a first generation unit 122A, a second generation unit 122B, and a hierarchical structure information generating unit 122C.

The first generation unit 122A generates a crack vector on the basis of the crack information that is acquired. The crack information is vectorized, and vector data of the crack (hereinafter "crack vector") is generated. When a plurality of crack vectors are generated, a relative angle between the plurality of crack vectors is calculated. That is, an angle between a crack vector and another crack vector can be calculated.

The second generation unit 122B generates, among the crack vectors that are generated, a coupling crack vector according to a coupling standard, for coupling crack vectors that are spatially separated from each other. The coupling standard can be arbitrarily set. Note that the hierarchical structure information generating unit 122C generates hierarchical structure information indicating a hierarchical structure of the crack vectors.

The display unit 104 above can display, in a classified manner, the crack vectors and the coupling crack vector generated by the crack vector generating unit 122.

The operating unit 106 can accept a user operation for editing the crack vectors and the coupling crack vector displayed on the display unit 104.

The CPU 110 includes an evaluation unit 124. The evaluation unit 124 acquires an evaluation result of the cracks of the structure on the basis of crack information of the crack vectors and the coupling crack vector that are edited. On the basis of at least the crack information of the crack vectors and the coupling crack vector, the evaluation unit 124 evaluates the degree of crack damage and determines an evaluation class (hereinafter also referred to as "rank information") of the degree of a crack of the structure. The determined rank information is added to the crack information of the crack vectors and the coupling crack vector. The evaluation result acquired by the evaluation unit 124 is stored in the evaluation unit 124 or the storage unit 108.

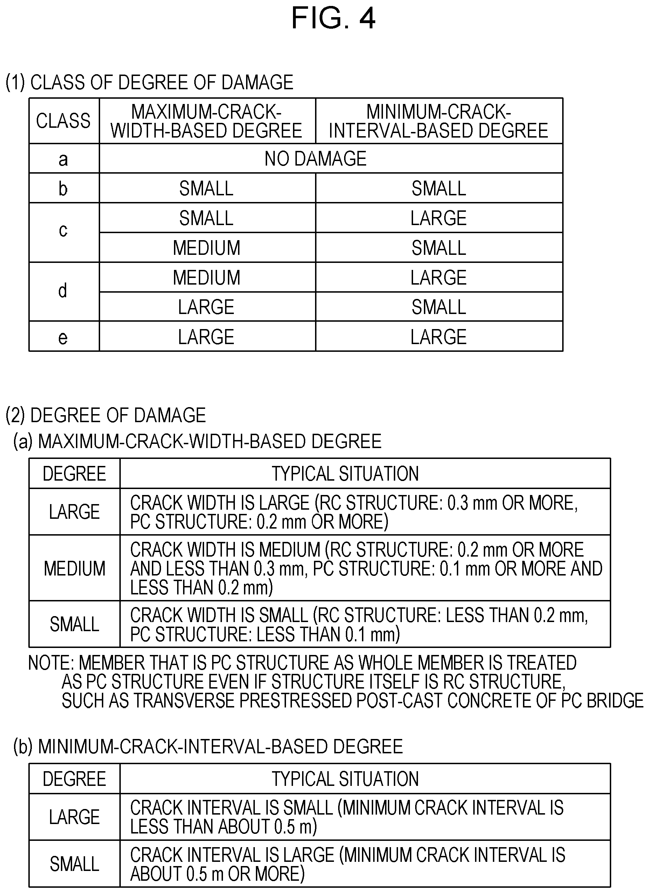

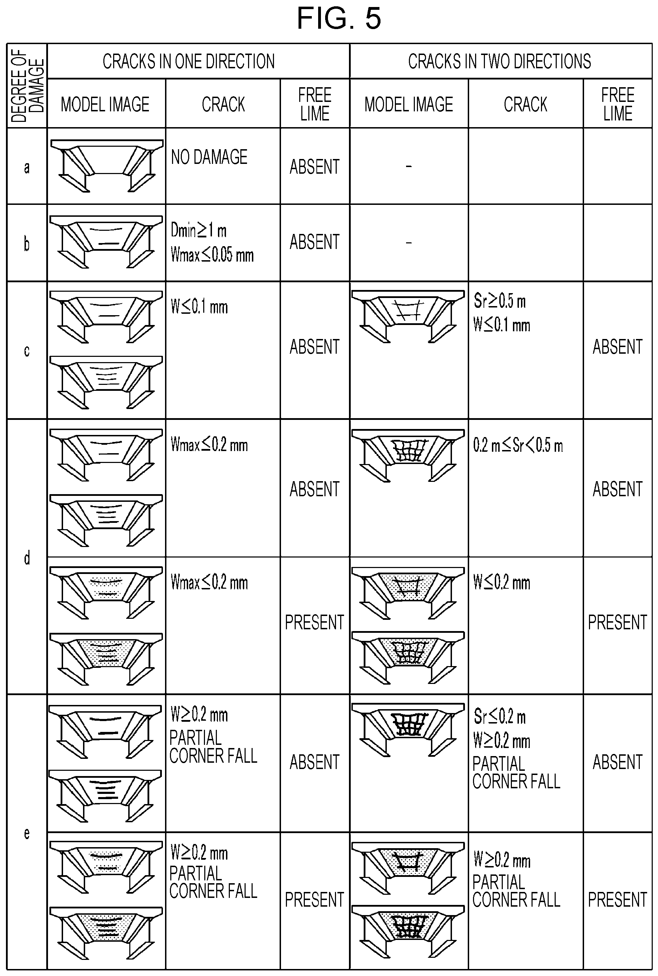

Figs. 4 and 5 illustrate standards for evaluating the degree of crack damage. Fig. 4 illustrates an example of a standard for evaluating the degree of crack damage (the Ministry of Land, Infrastructure, Transport and Tourism: Bridge Regular Inspection Outline). For (1) class of the degree of damage, evaluation is performed by using as five-stage classes, which are a, b, c, d, and e, on the basis of a combination of a maximum-crack-width-based degree and a minimum-crack-interval-based degree.

A crack width is classified on the basis of the maximum-crack-width-based degree, and a crack interval is classified on the basis of the minimum-crack-interval-based degree.

For (2) the degree of damage, in (a) the maximum-crack-width-based degree, damage is evaluated by using three-stage classes, which are large, medium, and small. For (2) the degree of damage, in (b) the minimum-crack-interval-based degree, damage is evaluated by using two-stage classes, which are large and small.

Fig. 5 illustrates another example of the standard for evaluating the degree of crack damage. The evaluation target is a crack on a deck slab. A crack on a deck slab means a crack that occurs in a member called a deck slab of a bridge. The degree of damage is evaluated by using five-stage classes, which are a, b, c, d, and e, in accordance with a crack width, a crack interval, and a direction. Here, the evaluation corresponds to each of cracks in one direction and cracks in two directions. These evaluation standards are provided from a country, a local government, a company, or the like.

Next, as illustrated in Fig. 2, the external input/output unit 102 functions as an output unit that outputs data of the evaluation result stored in the crack evaluation apparatus 10. The data of the evaluation result is converted by the CPU 110 into an output format (e.g., CSV (comma-separated values) format) required by a user. The output format is not limited to any particular one. The evaluation result can be output to the outside of the crack evaluation apparatus 10, and the output evaluation result can be secondarily used. For example, data of the evaluation result illustrated in Table 1 is output. Items and the like in the data are not limited to any particular ones.

**[Table 1]**

| Crack Label Number | Crack Width (mm) | Crack Length (mm) | Damage Rank |
|---|---|---|---|
| 1 | 0.15 | 28.23 | d |
| 2 | 0.08 | 106.13 | c |
| 3 | 0.05 | 19.42 | b |
| 4 | 0.04 | 7.53 | b |
| 5 | 0.15 | 42.62 | d |
| 6 | 0.09 | 42.49 | c |

The CPU 110 includes a control unit 126 and controls the entire operation of the crack evaluation apparatus 10.

The crack evaluation apparatus 10 is not limited to the above configuration and can include a device, a program, and a storage device (not limited to these names) for performing requested processing.

### <Crack Evaluation Method>

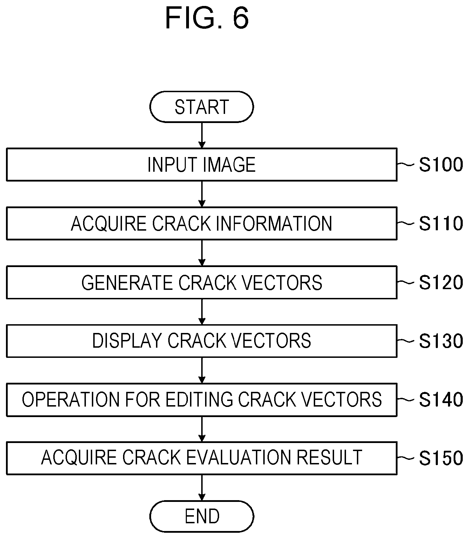

Next, a crack evaluation method using the crack evaluation apparatus 10 with the above configuration will be described with reference to some drawings. Fig. 6 is a flowchart of the crack evaluation method.

First, a captured image of an inspection target structure is input by using the external input/output unit 102 (step S100). The captured image can be input directly from the imaging apparatus 20 to the external input/output unit 102 through wireless communication or wired communication with the imaging apparatus 20. If a captured image is stored in the database 30, the captured image can be input from the database 30 to the external input/output unit 102. If a captured image is stored in a recording medium, the captured image can be input from the recording medium to the external input/output unit 102.

The input captured image includes information about a date and time of imaging by the imaging apparatus 20. The imaging date and time is not necessarily the same throughout all captured images at the same inspection time and may be over a plurality of days. A plurality of captured images may be input at a time, or one captured image may be input at a time. Note that the "image" of the inspection target structure in the present invention may be a captured image in a state of being generated by the imaging apparatus 20 or may be an image after certain image processing is performed on the captured image generated by the imaging apparatus 20.

Subsequently, the crack information acquiring unit 120 performs image processing on the captured image of the inspection target structure to acquire crack information about cracks of the structure (step S110). For example, the crack information acquiring unit 120 acquires the crack information by extracting cracks from the captured image.

A crack can be extracted by various methods. For example, the crack detection method described in JP4006007B can be used. In this method, a wavelet coefficient table is created in advance by performing wavelet transformation on an image by changing concentrations of a crack and concrete in a pseudo image including the crack and concrete. Then, a wavelet coefficient obtained by performing wavelet transformation on an input image obtained by imaging a concrete surface that is a crack detection target is compared with the wavelet coefficient table created in advance, so that a crack region and a non-crack region are determined.

Note that the acquisition of the crack information by the crack information acquiring unit 120 is not limited to a case where a partial image of damage (hereinafter also referred to as "damage part image") is extracted from the captured image. Extraction of damage by the crack information acquiring unit 120 includes a case where a damage region is only identified within the captured image, in which case information (hereinafter also referred to as "damage region information") indicating at least a part of the damage region within the captured image is extracted by the crack information acquiring unit 120.

For example, on the basis of the captured image and the damage (at least one of the damage part image and the damage region information) extracted from the captured image, the crack information acquiring unit 120 generates the crack information. As the crack information, the crack information acquiring unit 120 acquires data including a crack region and a crack width. The crack region and the crack width can be calculated from the captured image. The length and angle can be calculated from a crack vector. Note that data of the length and direction (angle) can also be acquired on the basis of image information. The crack information acquired in step S110 in Fig. 6 is input to the crack vector generating unit 122. The crack vector generating unit 122 generates crack vectors and a coupling crack vector (step S120).

On the basis of the crack information, the first generation unit 122A of the crack vector generating unit 122 vectorizes a crack part and generates crack vectors.

Upon vectorization, the first generation unit 122A binarizes and/or thins the detected cracks as necessary. The "vectorization" is to obtain a line segment defined by a start point and an end point for a crack. If a crack is curvy, the crack is divided into a plurality of sections such that a distance between a curve and a line segment becomes less than or equal to a threshold, and a crack vector is generated for each of the plurality of sections.

Upon generation of crack vectors, for example, a feature point of the deck slab 2 can be set as the origin of a coordinate system, and, regarding a group of crack vectors (vector group), an end point at which the distance from the origin is minimum can be set as a first start point, and an end point and a start point can be sequentially determined in a running direction of the crack vectors.

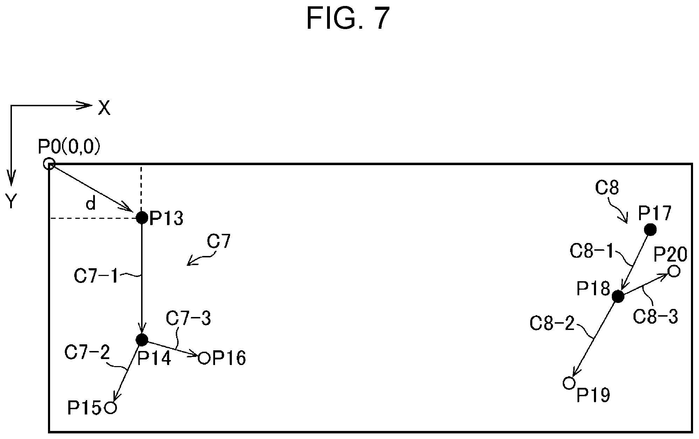

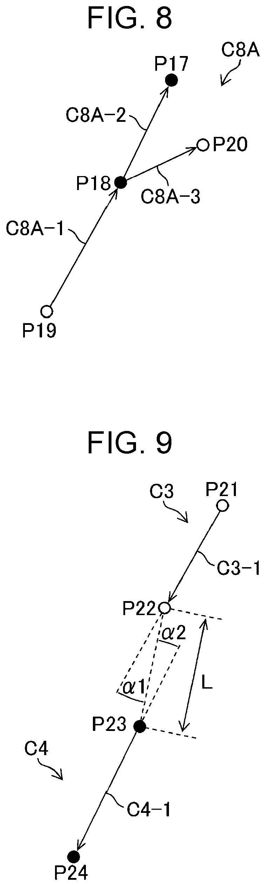

As illustrated in Fig. 7, point P0 on the deck slab 2 is set as the origin of a coordinate system, and the right direction and the downward direction in the drawing are set as an X-axis direction and a Y-axis direction of the coordinate system, respectively. Among points P13, P14, P15, and P16 in vector group C7, point P13 at which distance d from point P0 is the shortest is determined as a start point of crack vector C7-1. Subsequently, point P14 is determined as an end point of crack vector C7-1 and start points of crack vectors C7-2 and C7-3, and points P15 and P16 are determined as end points of crack vectors C7-2 and C7-3, respectively. Similarly, in vector group C8, point P17 is determined as a start point of crack vector C8-1, and point P18 is determined as start points of crack vectors C8-2 and C8-3. Here, as illustrated in Fig. 7, a running direction of crack vector C8-3 (direction from point P18 toward point P20) is reverse to a running direction of crack vector C8-1. In such a case, as illustrated in Fig. 8, point P19 is set as a start point of crack vector C8A-1. Then, point P18 may be determined as an end point of crack vector C8A-1 and start points of crack vectors C8A-2 and C8A-3, and points P17 and P20 may be set as end points of crack vectors C8A-2 and C8A-3. Note that an aggregate of the crack vectors in this case is referred to as vector group C8A.

When the crack vectors are generated in the above manner, a crack that is continuous inside the deck slab 2 but is separated on the surface may be regarded as separated crack vectors. On the basis of the coupling standard, the second generation unit 122B of the crack vector generating unit 122 generates a coupling crack vector that couples a plurality of crack vectors that are spatially separated from each other. Through this coupling processing, the plurality of crack vectors are coupled to each other by the coupling crack vector and are regarded as one crack vector. Coupling the crack vectors corresponds to processing in which an operator traces a plurality of cracks. The coupling standard is stored in the crack vector generating unit 122 or the storage unit 108.

Fig. 9 illustrates an example of coupling crack vectors in one direction. As illustrated in Fig. 9, a situation is illustrated in which vector group C3 including crack vector C3-1 (points P21 and P22 are a start point and an end point, respectively) and vector group C4 including crack vector C4-1 (points P23 and P24 are a start point and an end point, respectively) are extracted. In addition, an angle between crack vector C3-1 and a line segment connecting point P22 and point P23 is α1, an angle between the line segment connecting point P22 and point P23 and crack vector C4-1 is α2, and the distance between P22 and point P23 is L. In this case, if angle α1, angle α2, and distance L are less than or equal to threshold values, crack vectors C3-1 and C4-1 are coupled to each other, and vector groups C3 and C4 are merged. In Fig. 9, each of angle α1, angle α2, distance L, and the threshold values of the respective values is the coupling standard. Note that the coupling standard is not limited to angle α1, angle α2, and distance L.

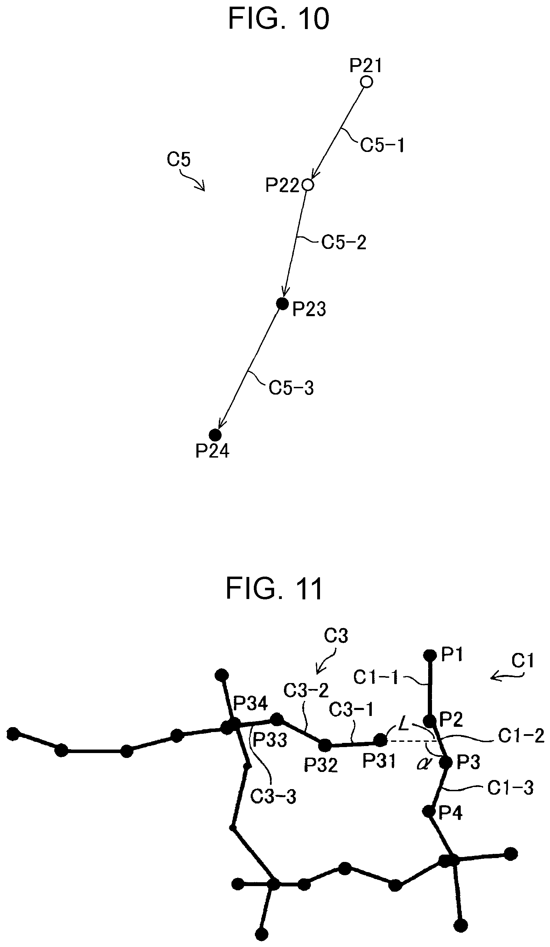

Specifically, as illustrated in Fig. 10, coupling crack vector C5-2 is generated. Coupling crack vector C5-2 couples crack vector C5-1 (identical with crack vector C3-1) and crack vector C5-3 (identical with crack vector C4-1) to each other. A new vector group including these crack vectors C5-1 and C5-3 and coupling crack vector C5-2 is vector group C5. In this manner, by coupling, as appropriate, vectors that are spatially separated from each other on the surface of the deck slab 2, a coupling relationship between vectors can be accurately grasped. Vector group C5 has crack information of crack vectors C5-1 and C5-3 and coupling crack vector C5-2.

Next, Fig. 11 illustrates an example of coupling crack vectors in two directions. In Fig. 11, only some points and crack vectors are displayed. As illustrated in Fig. 11, vector group C1 is constituted by crack vectors C1-1 to C1-3 .... Start points and end points of these crack vectors are points P1 to P4 ....

Vector group C3 is constituted by crack vectors C3-1 to C3-3 .... Start points and end points of these crack vectors are points P31 to P34 .... The angle between crack vectors C3-1 and C1-2 is α, and the distance between point P31 and crack vector C1-2 is L. In this case, if angle α and distance L are less than or equal to threshold values, crack vectors C3-1 and C1-2 are coupled to each other. In Fig. 11, each of angle α, distance L, and the threshold values of the respective values is the coupling standard. Note that the coupling standard is not limited to angle α and distance L.

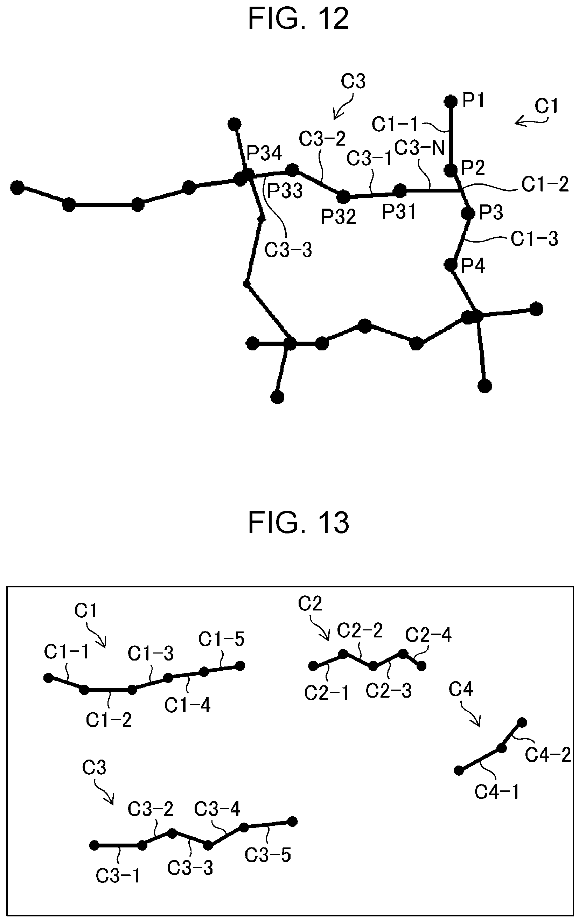

Specifically, as illustrated in Fig. 12, coupling crack vector C3-N is generated. Coupling crack vector C3-N is coupled to crack vector C3-1. A new vector group including these crack vectors C3-1 to C3-3 ... and coupling crack vector C3-N is vector group C3. Vector group C3 has crack information of crack vectors C3-1 to C3-3 ... and coupling crack vector C3-N.

In this manner, by coupling, as appropriate, vectors that are spatially separated from each other on the surface of the deck slab 2, a coupling relationship between vectors can be accurately grasped.

Fig. 13 illustrates an example of coupling crack vectors in one direction. As illustrated in Fig. 13, a situation is illustrated in which vector group C1 including crack vectors C1-1 to C1-5, vector group C2 including crack vectors C2-1 to C2-4, vector group C3 including crack vectors C3-1 to C3-5, and vector group C4 including crack vectors C4-1 and C4-2 are extracted.

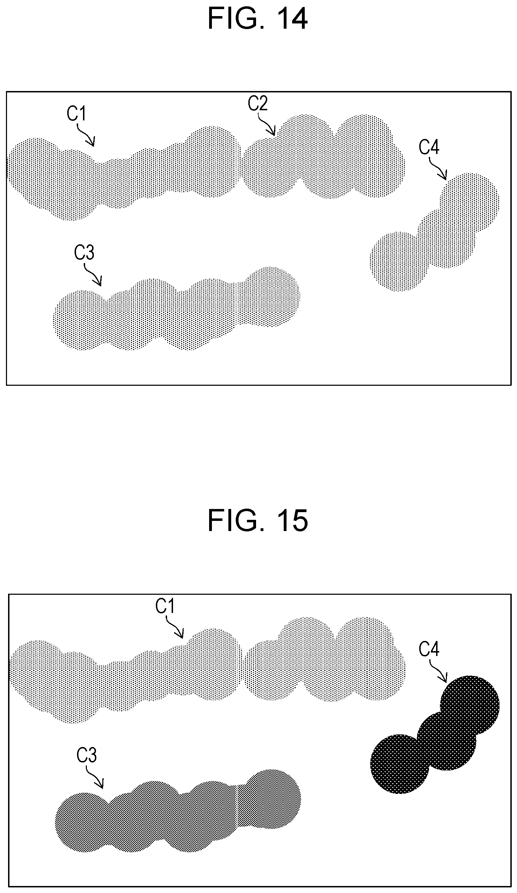

Next, as illustrated in Fig. 14, crack vectors included in vector groups C1 to C4 are subjected to expansion processing. In the expansion processing, binarized image data is created from the crack vectors, and subsequently, the periphery of the image data is intentionally replaced with binary data, which is the same as the image data. Thus, the crack vectors are thickened. Here, the crack vectors subjected to the expansion processing constitute vector groups C1 to C4. Spatially separated crack vectors are coupled to each other through the expansion processing. In Fig. 14, vector group C1 and vector group C2 are coupled to each other.

As illustrated in Fig. 15, a region in which the crack vectors subjected to the expansion processing are in contact with each other (or referred to as line group) constitutes one vector group. In Fig. 15, three vector groups are constituted by vector group C1 in which original vector groups C1 and C3 are coupled to each other and vector groups C3 and C4 that have been originally present.

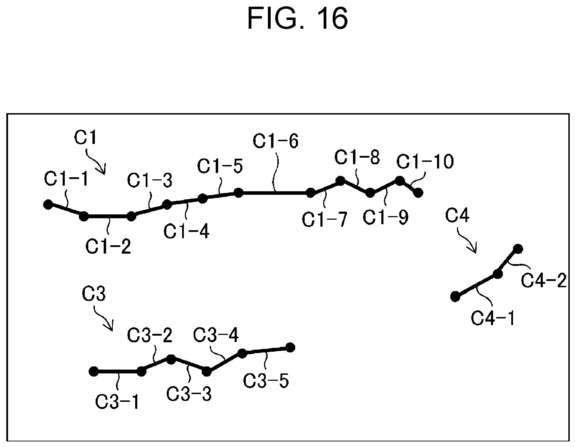

As illustrated in Fig. 16, the expanded crack vectors are restored to the original state. If it is determined that a plurality of crack vectors constitute one vector group in Fig. 15, the following processing is performed. A plurality of crack vectors that are included in one vector group and that are spatially separated from each other are coupled to each other by a coupling crack vector.

Specifically, as illustrated in Fig. 16, coupling crack vector C1-6 that couples original vector groups C1 and C3 to each other is formed. A new vector group including crack vectors C1-1 to C1-5, crack vectors C1-7 to C1-10, and coupling crack vector C1-6 constitutes vector group C1. In this manner, by coupling, as appropriate, vectors that are spatially (on the surface of the deck slab 2) separated from each other, a coupling relationship between vectors can be accurately grasped. Vector group C1 has crack information of crack vectors C1-1 to C1-5, crack vectors C1-7 to C1-10, and coupling crack vector C1-6. In the expansion processing, the degree for expanding a crack vector is set as a threshold value, and the threshold value is the coupling standard.

Upon completion of processing by the first generation unit 122A and the second generation unit 122B, the hierarchical structure information generating unit 122C generates hierarchical structure information indicating a hierarchical structure of crack vectors. The hierarchical structure information is information expressing a coupling relationship between the crack vectors in a hierarchy. The hierarchical structure information includes hierarchy identification information (also referred to as "affiliation hierarchy information") indicating which hierarchy each vector belongs to in a vector group constituted by a plurality of crack vectors. For the hierarchy identification information, for example, a hierarchical number represented by a numeral can be used. A code other than a numeral (e.g., including an alphabet or a symbol) may also be used for representation.

The crack vector generating unit 122 can add various types of attribute information (also referred to as "additional information") to the crack information. For example, in a case of a crack, not only the position and direction where the crack occurs, but also various types of attribute information indicating the length and width of the crack, the interval between cracks, and the density of cracks may be added to the crack information.

### <Crack Vector Information>

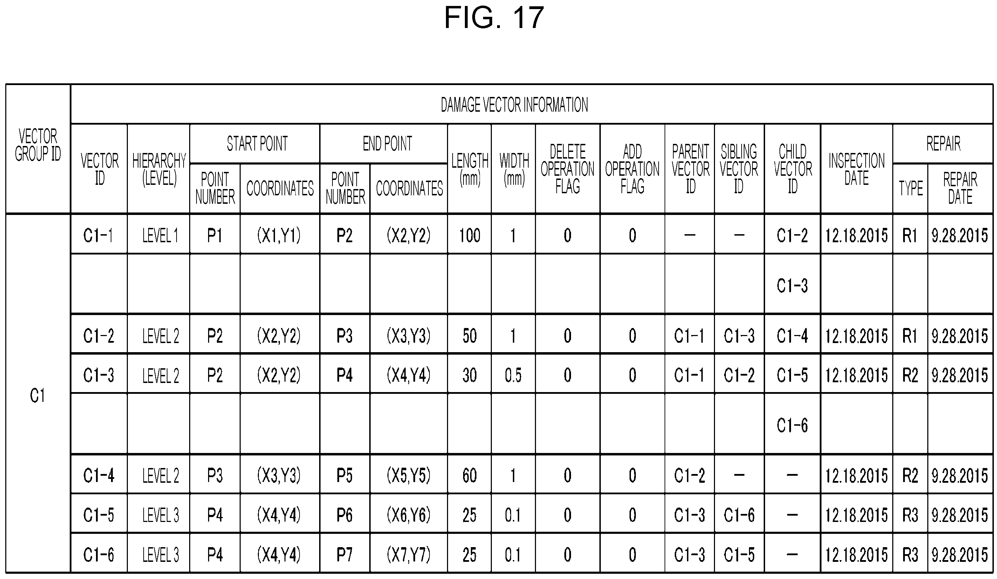

Fig. 17 is an example of crack vector information. The crack vector information is constituted by information of a vector group to which crack vectors belong, unique information of each crack vector, information of another crack vector that is coupled to each crack vector in the vector group, and additional information.

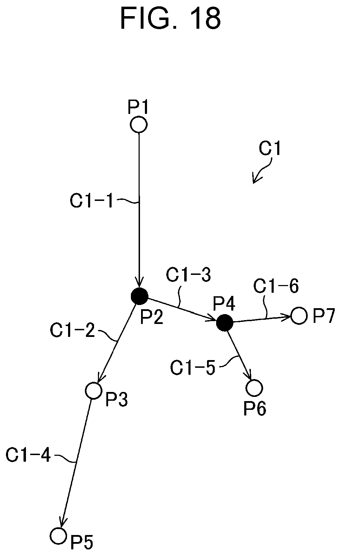

Information of a vector group (in a case of the table in Fig. 17, vector group C1; see Fig. 18) includes a label (identification information) of the group. Unique information of a crack vector includes a label (identification information) of the crack vector, a hierarchy (level; affiliation hierarchy information), a start point and an end point (point number and position coordinates), and the length. Here, regarding the hierarchy (level), Level 1 is the highest, and the hierarchy is lower as the numeral increases. A specific method of determining the hierarchy will be described later in detail. Other information of the crack vector includes, as described below, labels (identification information) of a parent vector, a sibling vector, and a child vector. The additional information includes the width of damage, a delete operation flag, an add operation flag, an inspection date, and repair information.

### <Parent Vector, Sibling Vector, and Child Vector>

In this embodiment, if an end point of one crack vector is a start point of another crack vector, such one crack vector is referred to as "parent vector", and the other crack vector is referred to as "child vector". The number of parent vectors is determined to be zero or one for one crack vector, whereas any given number of child vectors, which is greater than or equal to zero, may be present for one parent vector. In addition, if an end point of a parent vector is start points of a plurality of child vectors, each of these plurality of child vectors is referred to as "sibling vector". Any given number of sibling vectors, which is greater than or equal to zero, may be present.

In this manner, since the hierarchical structure information includes labels (identification information) of a parent vector, a sibling vector, and a child vector in this embodiment, on the basis of any given crack vector, by referring to the ID of the vector, the parent vector, the sibling vector, and the child vector can be sequentially determined. For example, it is possible to determine a parent vector of a crack vector and to further determine a parent vector of the parent vector. In this manner, with the crack evaluation apparatus 10 according to this embodiment, it is possible to easily grasp a coupling relationship between crack vectors and to easily analyze and search for crack vectors.

### <Additional Information>

The "width" included in the additional information indicates the width of a crack corresponding to each crack vector. A delete operation flag indicates whether a delete operation is performed on the vector, and is "1" if the delete operation is performed and is "0" if not. Referring to this delete operation flag, display and non-display of the crack vector can be switched. An add operation flag is related to an embodiment of detecting a crack vector, and is "0" if the vector is automatically detected, is "1" if the vector is manually added (by input of an instruction from a user), and is "2" if the vector is manually added and generated by connecting vectors with different labels.

For "inspection date", a date on which an image of damage is captured is set, but may be edited by input of an instruction from a user via the operating unit 106. In addition, "repair" information can be generated on the basis of input of an instruction (type of repair and repair date) from a user via the operating unit 106. For example, the type of repair is cement filling, resin filling, leaving (follow-up observation), or the like (R1, R2, and R3 in the table in Fig. 17).

### <Hierarchy of Crack Vector>

Next, a hierarchy (level) to which crack vectors belong will be described. The hierarchy of the crack vectors can be determined by various methods as illustrated in the following examples, for example.

### <Method of Determining Hierarchy>

Fig. 18 illustrates vector group C1. Vector group C1 is constituted by crack vectors C1-1 to C1-6. Start points or end points of these crack vectors are points P1 to P7. In such a situation, the hierarchy is lower as the crack vector branches (an end point of a crack vector is start points of other plurality of crack vectors). Specifically, the hierarchy of crack vector C1-1 is the highest Level 1, the hierarchy of crack vectors C1-2 and C1-3 having point P2, which is an end point of crack vector C1-1, as start points, is Level 2, which is lower than crack vector C1-1. Similarly, the hierarchy of crack vectors C1-5 and C1-6 having point P4, which is an end point of crack vector C1-3, as start points, is Level 3, which is lower than crack vector C1-3. On the other hand, although point P3, which is an end point of crack vector C1-2, is a start point of crack vector C1-4, the crack vector having point P3 as a start point is only crack vector C1-4 and does not branch, and thus, the hierarchy of crack vector C1-4 is Level 2, which is the same as the level of crack vector C1-2. The hierarchy of the crack vectors determined in this manner is included in the hierarchical structure information as illustrated in the table in Fig. 17.

Subsequently, the display unit 104 displays, in a classified manner, the crack vectors and the coupling crack vector that are generated (step S130).

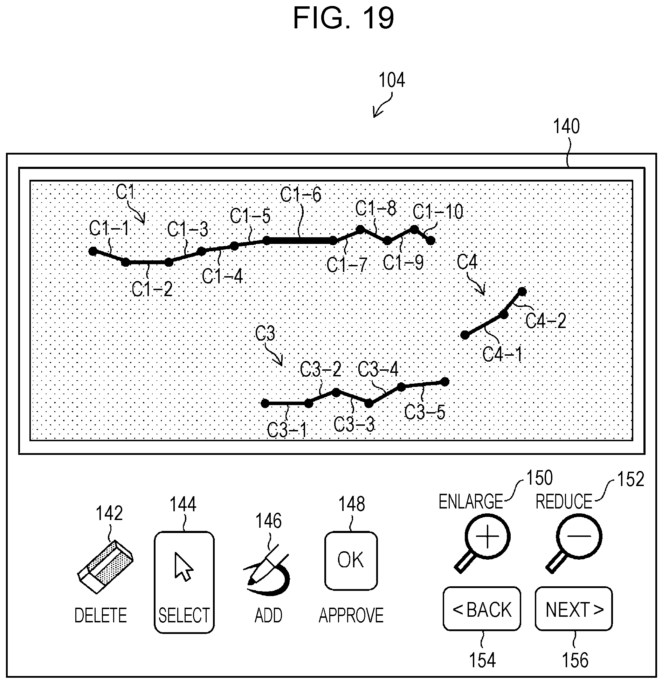

In response to generation of the crack vectors and the coupling crack vector, the display unit 104 can automatically display the crack vectors and the coupling crack vector. In addition, a user can receive a notification indicating that the crack vectors and the coupling crack vector are generated, and then, the user can cause the display unit 104 to display the crack vectors and the coupling crack vector. Fig. 19 illustrates a state in which the display unit 104 displays, in a classified manner, the crack vectors and the coupling crack vector that are generated.

As illustrated in Fig. 19, the display unit 104 includes, for example, a display screen 140 and various buttons. Various buttons include, for example, a delete button 142, a select button 144, an add button 146, an approve button 148, an enlarge button 150, a reduce button 152, a "next" button 156, and a "back" button 154. Various buttons function as part of the operating unit 106.

On the display screen 140, vector groups C1, C3, and C4 are displayed. Vector groups C1, C3, and C4 are created by the crack vector generating unit 122 in accordance with the processing illustrated in Figs. 13 to 16.

Vector group C1 includes crack vectors C1-1 to C1-5, crack vectors C1-7 to C1-10, and coupling crack vector C1-6. In addition, vector group C3 includes crack vectors C3-1 to C3-5. Vector group C4 includes crack vectors C4-1 and C4-2.

In this embodiment, in vector group C1, coupling crack vector C1-6 generated by the crack vector generating unit 122 is displayed in a classified manner from crack vectors C1-1 to C1-5 and crack vectors C1-7 to C1-10. To display in a classified manner means to display in a visually distinguishable manner. The crack vectors and the coupling crack vector are displayed in a classified manner by using any of different colors, line types (e.g., solid line and dotted line), line widths, and brightness, or a combination of these.

In vector group C1 in Fig. 19, crack vectors C1-7 to C1-10 and coupling crack vector C1-6 are displayed in a classified manner by using different line widths. A user can easily recognize the coupling crack vector created by the crack vector generating unit 122.

The crack evaluation apparatus 10 according to the embodiment creates the coupling crack vector on the basis of the coupling standard, thereby reducing the load on the user including an operator who traces cracks.

Subsequently, the operating unit 106 accepts a user operation for editing the plurality of crack vectors and the coupling crack vector that are displayed (step S140).

The crack evaluation apparatus 10 according to the embodiment creates the coupling crack vector on the basis of the coupling standard. On the other hand, the coupling crack vector created by the crack vector generating unit 122 may be different from a trace of cracks obtained by an operator. As a result, an evaluation result based on the crack vectors through image processing may be different from an evaluation result of the degree of damage obtained by the operator.

The crack evaluation apparatus 10 can accept, by using the operating unit 106, editing of the crack vectors and the coupling crack vector that are generated by the crack vector generating unit 122.

Since the crack vectors and the coupling crack vector are displayed on the display unit 104 in a visually distinguishable manner, a user can easily determine good and bad of the coupling crack vector when editing.

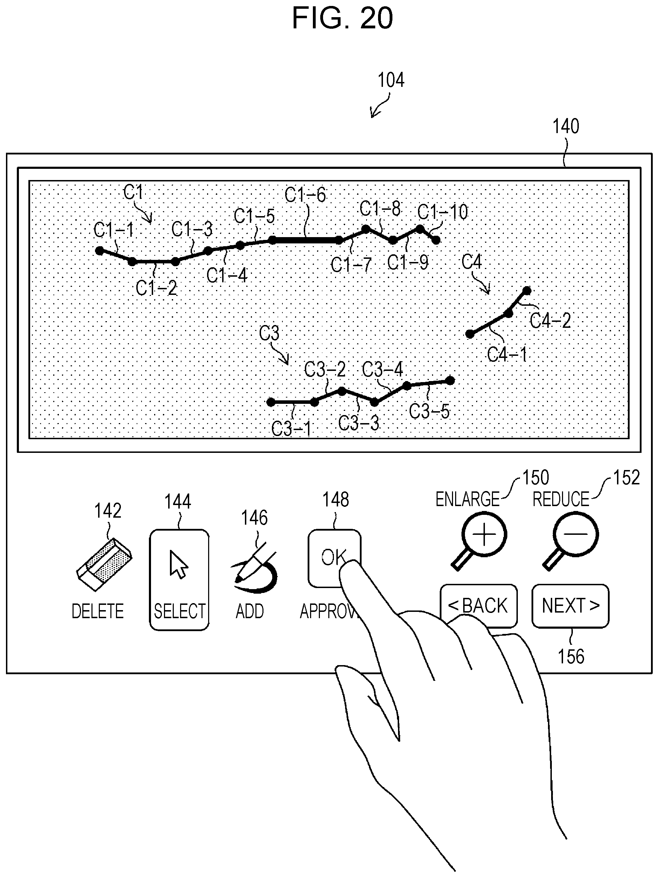

Next, a specific editing operation will be described. Fig. 20 illustrates an example of an editing operation and illustrates an operation in a case where the coupling crack vector has no problem. Initially, a user checks coupling crack vector C1-6 that is displayed in a classified manner. The user determines good and bad of the coupling crack vector C1-6. When coupling crack vector C1-6 has no problem, the user presses the approve button 148. The user can check coupling crack vector C1-6 in detail as necessary by pressing the enlarge button 150 and the reduce button 152.

The user can cause the display unit 104 to display other crack vectors and another coupling crack vector by pressing the "next" button 156 and can determine good and bad of the coupling crack vector.

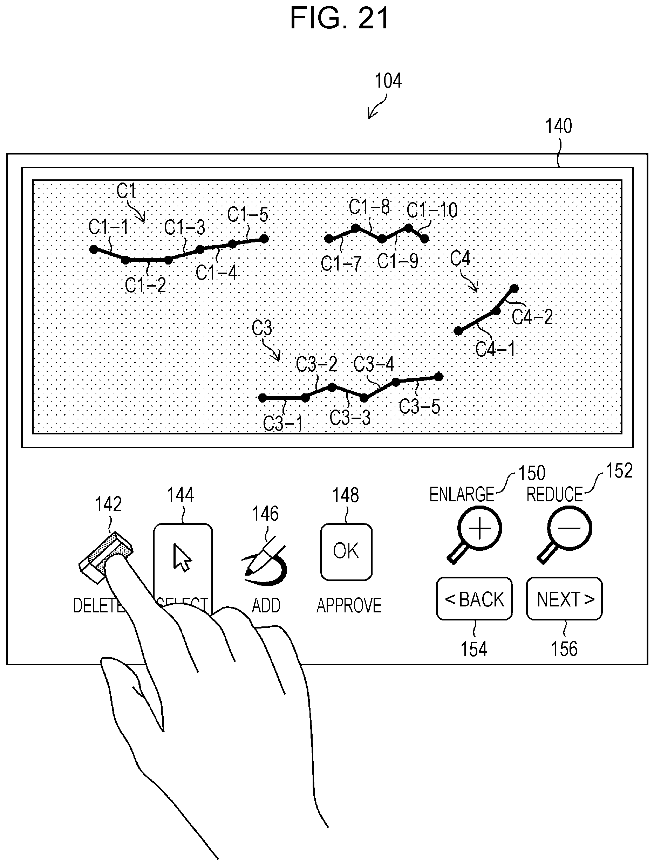

Fig. 21 illustrates another example of the editing operation and illustrates an operation in a case where a coupling crack vector is to be deleted. A user checks crack vector C1-6 that is displayed in a classified manner. The user determines to delete crack vector C1-6. The user presses the select button 144 to select crack vector C1-6 to be deleted. The user presses the delete button 142 to delete crack vector C1-6. Subsequently, by the user pressing the approve button 148, deletion of crack vector C1-6 is executed.

When crack vector C1-6 is deleted, vector group C1 becomes two vector groups. The hierarchical structure information of the crack vectors is rewritten. For example, vector group C1 is rewritten as vector group C1 including crack vectors C1-1 to C1-5 and vector group C2 including crack vectors C2-1 to C2-4.

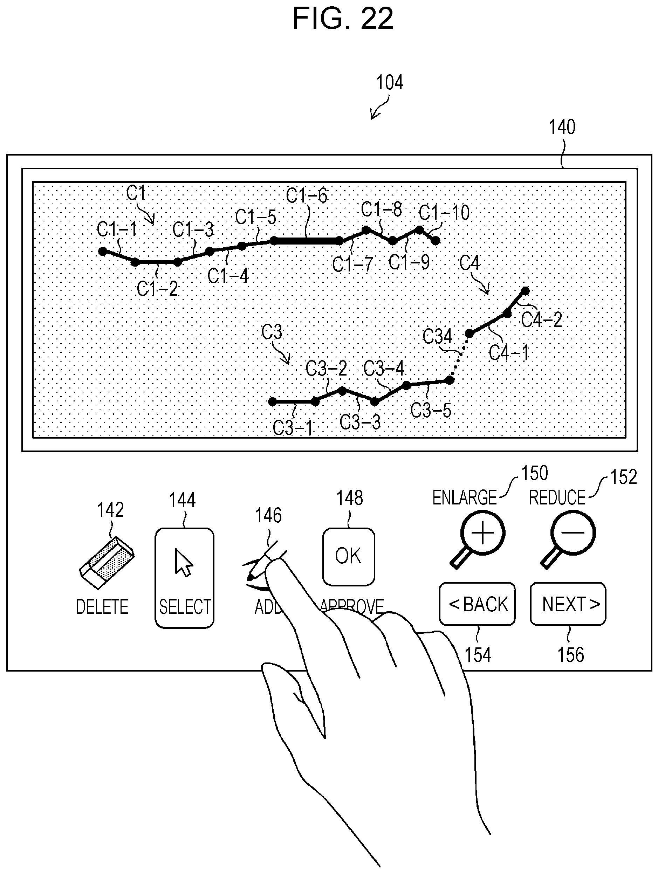

Fig. 22 illustrates still another example of the editing operation and illustrates an operation in a case where a coupling crack vector is to be added. A user checks crack vector C1-6 that is displayed in a classified manner, further checks a coupling situation of vector group C3 and vector group C4, and determines to add a crack vector that couples vector group C3 and vector group C4 to each other.

The user presses the select button 144 to select crack vector C3-5 and crack vector C4-1 that are coupling targets and then presses the add button 146. New coupling crack vector C34 is displayed and couples crack vector C3-5 and crack vector C4-1 to each other. New coupling crack vector C34 is displayed in a classified manner from crack vectors C1-1 to C1-5, C1-7 to C1-10, C3-1 to C3-5, and C4-1 and C4-2 and crack vector C1-6. In the embodiment, new coupling crack vector C34 is displayed by a dotted line. The user can recognize the coupling crack vector generated by the crack vector generating unit 122 and the new coupling crack vector added by the user.

Subsequently, by the user pressing the approve button 148, addition of new coupling crack vector C34 is executed.

When new coupling crack vector C34 is added, vector group C3 and vector group C4 constitute one vector group. The hierarchical structure information of crack vectors is rewritten. For example, new vector group C3+4 is generated, and the vector groups are written as new vector group C3+4 including crack vectors C3-1 to C3-5 and C4-1 and C4-2 and new coupling crack vector C34.

Subsequently, the evaluation unit 124 acquires an evaluation result of cracks of the structure on the basis of crack information of the crack vectors and the coupling crack vector that are edited (step S150).

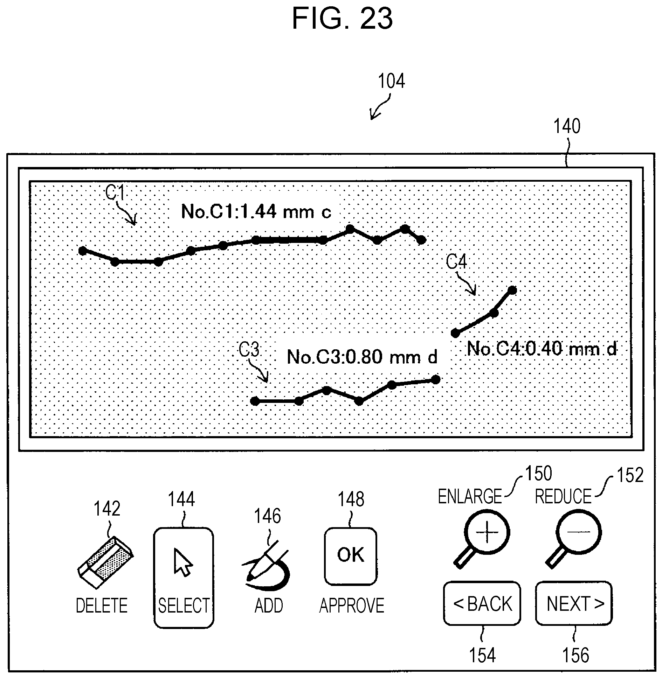

As illustrated in Fig. 23, a user can cause the display unit 104 to display the evaluation result and can check the evaluation result. For example, the user causes the display unit 104 to display the evaluation result by inputting an instruction via the operating unit 106. As illustrated in Fig. 23, regarding the evaluation result, for example, a crack number, a crack length, and the evaluation result (evaluation class: rank information) is displayed for each crack. Each evaluation result can also be displayed in a different color.

A user can check details of the evaluation result by selecting an element number and pressing the approve button 148. The hierarchical structure information is displayed. In addition, the user can cause the display unit 104 to display ground information of the evaluation result, for example, an evaluation standard of the degree of crack damage illustrated in Fig. 4 or Fig. 5. The user can determine the validity of the evaluation result.

The user can check details of the evaluation result and can edit the evaluation result. The user selects an evaluation result to edit. The display unit 104 is switched to, for example, an editing screen of the evaluation result. The user can directly input an evaluation class into a cell of the evaluation class with a keyboard or the like. In addition, the user can select the evaluation class from a drop-down list displayed in the cell of the evaluation class. In this manner, the user can edit the evaluation class. Then, by the user pressing the approve button 148, the evaluation class is edited.

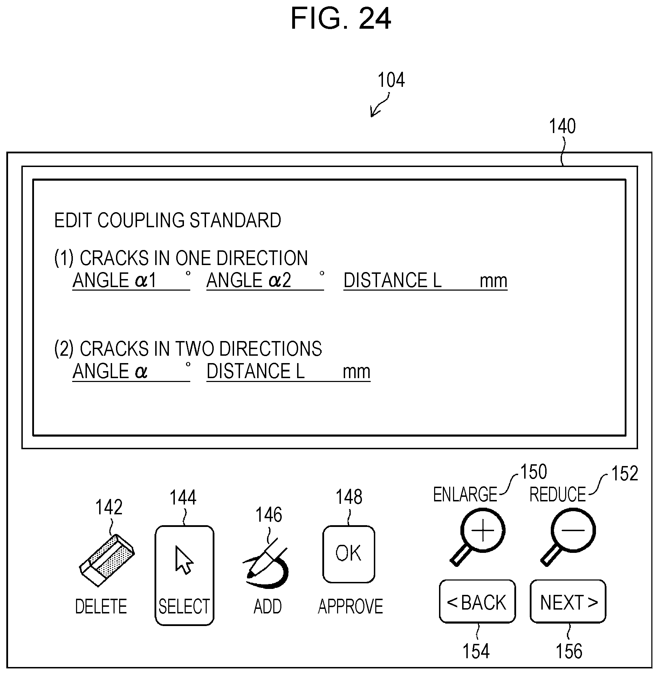

In addition, the user can edit the coupling standard. Fig. 24 illustrates an example of an operation for editing the coupling standard. As illustrated in Fig. 24, the user can cause the display unit 104 to display a coupling standard editing screen. In Fig. 24, as an example of the coupling standard editing screen, the display unit 104 displays "(1) cracks in one direction" and "(2) cracks in two directions". Angle α1 (°), angle α2 (°), and distance L (mm) each serving as the coupling standard of cracks in one direction are displayed. In addition, angle α (°) and distance L (mm) each serving as the coupling standard of cracks in two directions are displayed. The user selects the coupling standard to edit. The user can directly input a threshold value into a cell of the coupling standard with a keyboard or the like. In addition, the user can select the threshold value from a drop-down list displayed in the cell of the coupling standard. Then, by the user pressing the approve button 148, the coupling standard is edited.

Hardware that implements the crack evaluation apparatus according to the present invention can be constituted by various processors. Various processors include a CPU (Central Processing Unit), which is a general-purpose processor that functions as various processing units by executing programs, a programmable logic device (PLD), which is a processor in which the circuit configuration is changeable after manufacture, such as an FPGA (Field Programmable Gate Array), a dedicated electric circuit, which is a processor having a circuit configuration that is specially designed to execute specific processing, such as an ASIC (Application Specific Integrated Circuit), and the like. One processing unit constituting the crack evaluation apparatus may be constituted by one of the above various processors or may be constituted by two or more processors of the same type or different types. For example, one processing unit may be constituted by a plurality of FPGAs or a combination of a CPU and an FPGA. In addition, a plurality of processing units may be constituted by one processor. As a first example for constituting a plurality of processing units by one processor, one processor may be constituted by a combination of one or more CPUs and software, and this processor may function as a plurality of processing units, as typified by a computer such as a client or a server. As a second example, a processor may be used that implements the functions of the entire system including a plurality of processing units with one IC (Integrated Circuit) chip, as typified by a system on chip (SoC) or the like. In this manner, various processing units are constituted by one or more of the above various processors in terms of hardware configuration. More specifically, the hardware configuration of these various processors is electric circuitry constituted by combining circuit elements such as semiconductor elements.

### Reference Signs List

- 1: bridge
- 1: level
- 2: deck slab
- 2: level
- 3: main girder
- 3: level
- 3A: joint portion
- 10: crack evaluation apparatus
- 20: imaging apparatus
- 30: database
- 102: external input/output unit
- 104: display unit
- 106: operating unit
- 108: storage unit
- 120: crack information acquiring unit
- 122: crack vector generating unit
- 122A: first generation unit
- 122B: second generation unit
- 122C: hierarchical structure information generating unit
- 124: evaluation unit
- 126: control unit
- 140: display screen
- 142: delete button
- 144: select button
- 146: add button
- 148: approve button
- 150: enlarge button
- 152: reduce button
- 154: "back" button
- 156: "next" button
- d: distance
- L: distance
- α: angle
- α1: angle
- α2: angle

## Claims

1. A crack evaluation apparatus (10) comprising:
a crack information acquiring unit (120) that performs image processing on a captured image of a structure and acquires crack information about cracks of the structure, the crack information being data including a crack region and a crack width;
a crack vector generating unit (122) comprising
a first generation unit (122A) that generates crack vectors, each of which is a line segment defined by a start point and an end point of the respective crack or a part thereof, on the basis of the crack information that is acquired, and
a second generation unit (122B) that generates a coupling crack vector that couples, according to a predetermined coupling criterion, two crack vectors that are spatially separated from each other but belong to the same crack in the structure;
a display unit (104) that displays, in a visually distinguishable manner, the crack vectors and the coupling crack vector that are generated;
an operating unit (106) that accepts a user operation for editing the crack vectors and the coupling crack vector that are displayed; and
an evaluation unit (124) that acquires an evaluation result indicative of damage degree of the cracks of the structure on the basis of crack information of the crack vectors and the coupling crack vector that are edited.

2. The crack evaluation apparatus (10) according to claim 1, wherein the editing includes deleting the coupling crack vector and generating a new coupling crack vector that couples crack vectors that are spatially separated from each other.

3. The crack evaluation apparatus (10) according to claim 2, wherein the display unit (104) displays the new coupling crack vector in a visually distinguishable manner from the crack vectors and the coupling crack vector.

4. The crack evaluation apparatus (10) according to any one of claims 1 to 3, wherein the display unit (104) displays the evaluation result.

5. The crack evaluation apparatus (10) according to any one of claims 1 to 4, further comprising
an output unit that outputs data of the evaluation result.

6. The crack evaluation apparatus (10) according to any one of claims 1 to 5, wherein the display unit (104) displays ground information of the evaluation result.

7. The crack evaluation apparatus (10) according to any one of claims 1 to 6, wherein the operating unit (106) accepts a user operation for editing the evaluation result.

8. The crack evaluation apparatus (10) according to any one of claims 1 to 7, wherein the operating unit (106) accepts a user operation for editing the coupling criterion.

9. A computer-implemented crack evaluation method, the method comprising:
a step of performing image processing on a captured image of a structure and acquiring crack information about cracks of the structure, the crack information being data including a crack region and a crack width;
a step of generating a plurality of crack vectors on the basis of the crack information that is acquired, each of which is a line segment defined by a start point and an end point of the respective crack or a part thereof, and generating a coupling crack vector that couples two crack vectors that are spatially separated from each other but belong to the same crack in the structure;
a step of displaying, in a visually distinguishable manner, the plurality of crack vectors and the coupling crack vector that are generated;
a step of accepting a user operation for editing the plurality of crack vectors and the coupling crack vector that are displayed; and
a step of acquiring an evaluation result indicative of damage degree of the cracks of the structure on the basis of crack information of the plurality of crack vectors and the coupling crack vector that are edited.

10. A crack evaluation program comprising instructions which, when the program is executed by a computer, cause the computer to perform the crack evaluation method according to claim 9.

## Patentansprüche

1. Rissbewertungsvorrichtung (10), umfassend:
eine Rissinformations-Erfassungseinheit (120), die Bildverarbeitung an einem aufgenommenen Bild einer Struktur durchführt und Rissinformationen über Risse der Struktur erfasst, wobei die Rissinformationen Daten sind, die einen Rissbereich und eine Rissbreite enthalten;
eine Rissvektor-Erzeugungseinheit (122), die umfasst:
eine erste Erzeugungseinheit (122A), die Rissvektoren, von denen jeder ein Liniensegment ist, das durch einen Startpunkt und einen Endpunkt des jeweiligen Risses oder eines Teils davon definiert ist, auf der Grundlage der erfassten Rissinformationen erzeugt, und
eine zweite Erzeugungseinheit (122B), die einen gekoppelten Rissvektor erzeugt, der gemäß einem vorbestimmten Kopplungskriterium zwei Rissvektoren koppelt, die voneinander räumlich getrennt sind, aber zu demselben Riss in der Struktur gehören;
eine Anzeigeeinheit (104), die die Rissvektoren und den gekoppelten Rissvektor, die erzeugt werden, auf visuell unterscheidbare Weise anzeigt;
eine Bedienungseinheit (106), die eine Benutzerbedienung zum Bearbeiten der Rissvektoren und des gekoppelten Rissvektors, die angezeigt werden, annimmt; und
eine Bewertungseinheit (124), die ein Bewertungsergebnis, das Schadensgrad der Risse der Struktur angibt, auf der Grundlage von Rissinformationen der Rissvektoren und des gekoppelten Rissvektors, die bearbeitet werden, erfasst.

2. Rissbewertungsvorrichtung (10) nach Anspruch 1, wobei das Bearbeiten Löschen des gekoppelten Rissvektors und Erzeugen eines neuen gekoppelten Rissvektors, der Rissvektoren koppelt, die voneinander räumlich getrennt sind, enthält.

3. Rissbewertungsvorrichtung (10) nach Anspruch 2, wobei die Anzeigeeinheit (104) den neuen gekoppelten Rissvektor von den Rissvektoren und dem gekoppelten Rissvektor auf visuell unterscheidbare Weise anzeigt.

4. Rissbewertungsvorrichtung (10) nach einem der Ansprüche 1 bis 3, wobei die Anzeigeeinheit (104) das Bewertungsergebnis anzeigt.

5. Rissbewertungsvorrichtung (10) nach einem der Ansprüche 1 bis 4, ferner umfassend:
eine Ausgabeeinheit, die Daten des Bewertungsergebnisses ausgibt.

6. Rissbewertungsvorrichtung (10) nach einem der Ansprüche 1 bis 5, wobei die Anzeigeeinheit (104) Grundinformationen des Bewertungsergebnisses anzeigt.

7. Rissbewertungsvorrichtung (10) nach einem der Ansprüche 1 bis 6, wobei die Bedienungseinheit (106) eine Benutzerbedienung zum Bearbeiten des Bewertungsergebnisses annimmt.

8. Rissbewertungsvorrichtung (10) nach einem der Ansprüche 1 bis 7, wobei die Bedienungseinheit (106) eine Benutzerbedienung zum Bearbeiten des Kopplungskriteriums annimmt.

9. Computerimplementiertes Rissbewertungsverfahren, wobei das Verfahren umfasst:
einen Schritt des Durchführens von Bildverarbeitung an einem aufgenommenen Bild einer Struktur und des Erfassens von Rissinformationen über Risse der Struktur, wobei die Rissinformationen Daten sind, die einen Rissbereich und eine Rissbreite enthalten;
einen Schritt des Erzeugens von mehreren Rissvektoren auf der Grundlage der erfassten Rissinformationen, von denen jeder ein Liniensegment ist, das durch einen Startpunkt und einen Endpunkt des jeweiligen Risses oder eines Teils davon definiert ist, und des Erzeugens eines gekoppelten Rissvektors, der zwei Rissvektoren koppelt, die voneinander räumlich getrennt sind, aber zu demselben Riss in der Struktur gehören;
einen Schritt des Anzeigens der mehreren Rissvektoren und des gekoppelten Rissvektors, die erzeugt werden, auf visuell unterscheidbare Weise;
einen Schritt des Annehmens einer Benutzerbedienung zum Bearbeiten der mehreren Rissvektoren und des gekoppelten Rissvektors, die angezeigt werden; und
einen Schritt des Erfassens eines Bewertungsergebnisses, das Schadensgrad der Risse der Struktur angibt, auf der Grundlage von Rissinformationen der mehreren Rissvektoren und des gekoppelten Rissvektors, die bearbeitet werden.

10. Rissbewertungsprogramm, das Anweisungen umfasst, die, wenn das Programm von einem Computer ausgeführt wird, den Computer veranlassen, das Rissbewertungsverfahren nach Anspruch 9 durchzuführen.

## Revendications

1. Appareil d'évaluation de fissure (10) comprenant :
une unité d'acquisition d'informations de fissure (120) qui effectue un traitement d'images sur une image capturée d'une structure et acquiert des informations de fissure concernant des fissures de la structure, les informations de fissure étant des données incluant une région de fissure et une largeur de fissure ;
une unité de génération de vecteur de fissure (122) comprenant
une première unité de génération (122A) qui génère des vecteurs de fissure, chacun d'eux étant un segment de ligne défini par un point de départ et un point de fin de la fissure respective ou d'une partie de celle-ci, sur la base des informations de fissure qui sont acquises, et
une deuxième unité de génération (122B) qui génère un vecteur de fissure de couplage qui couple, selon un critère de couplage prédéterminé, deux vecteurs de fissure qui sont séparés spatialement l'un de l'autre mais appartiennent à la même fissure dans la structure ;
une unité d'affichage (104) qui affiche, de manière visuellement distinguable, les vecteurs de fissure et le vecteur de fissure de couplage qui sont générés ;
une unité d'opération (106) qui accepte une opération d'utilisateur pour éditer les vecteurs de fissure et le vecteur de fissure de couplage qui sont affichés ; et
une unité d'évaluation (124) qui acquiert un résultat d'évaluation indicatif d'un degré d'endommagement des fissures de la structure sur la base d'informations de fissure des vecteurs de fissure et du vecteur de fissure de couplage qui sont édités.

2. Appareil d'évaluation de fissure (10) selon la revendication 1, dans lequel l'édition inclut la suppression du vecteur de fissure de couplage et la génération d'un nouveau vecteur de fissure de couplage qui couple des vecteurs de fissure qui sont séparés spatialement l'un de l'autre.

3. Appareil d'évaluation de fissure (10) selon la revendication 2, dans lequel l'unité d'affichage (104) affiche le nouveau vecteur de fissure de couplage de manière visuellement distinguable des vecteurs de fissure et du vecteur de fissure de couplage.

4. Appareil d'évaluation de fissure (10) selon l'une quelconque des revendications 1 à 3, dans lequel l'unité d'affichage (104) affiche le résultat d'évaluation.

5. Appareil d'évaluation de fissure (10) selon l'une quelconque des revendications 1 à 4, comprenant en outre :
une unité de sortie qui sort des données du résultat d'évaluation.

6. Appareil d'évaluation de fissure (10) selon l'une quelconque des revendications 1 à 5, dans lequel l'unité d'affichage (104) affiche des informations d'appui du résultat d'évaluation.

7. Appareil d'évaluation de fissure (10) selon l'une quelconque des revendications 1 à 6, dans lequel l'unité d'opération (106) accepte une opération d'utilisateur pour éditer le résultat d'évaluation.

8. Appareil d'évaluation de fissure (10) selon l'une quelconque des revendications 1 à 7, dans lequel l'unité d'opération (106) accepte une opération d'utilisateur pour éditer le critère de couplage.

9. Procédé d'évaluation de fissure mis en œuvre par ordinateur, le procédé comprenant :
une étape d'effectuer un traitement d'images sur une image capturée d'une structure et d'acquérir des informations de fissure concernant des fissures de la structure, les informations de fissure étant des données incluant une région de fissure et une largeur de fissure ;
une étape de générer une pluralité de vecteurs de fissure sur la base des informations de fissure qui sont acquises, chacun d'eux étant un segment de ligne défini par un point de départ et un point de fin de la fissure respective ou d'une partie de celle-ci, et de générer un vecteur de fissure de couplage qui couple deux vecteurs de fissure qui sont séparés spatialement l'un de l'autre mais appartiennent à la même fissure dans la structure ;
une étape d'afficher, de manière visuellement distinguable, la pluralité de vecteurs de fissure et le vecteur de fissure de couplage qui sont générés ;
une étape d'accepter une opération d'utilisateur pour éditer la pluralité de vecteurs de fissure et le vecteur de fissure de couplage qui sont affichés ; et
une étape d'acquérir un résultat d'évaluation indicatif d'un degré d'endommagement des fissures de la structure sur la base d'informations de fissure de la pluralité de vecteurs de fissure et du vecteur de fissure de couplage qui sont édités.

10. Programme d'évaluation de fissure comprenant des instructions qui, lorsque le programme est exécuté par un ordinateur, amènent l'ordinateur à effectuer le procédé d'évaluation de fissure selon la revendication 9.
